(19) Europäisches Patentamt
European Patent Office
Office européen des brevets

(11) Veröffentlichungsnummer: **0 035 687**
**B1**

(12) # EUROPÄISCHE PATENTSCHRIFT

(45) Veröffentlichungstag der Patentschrift: **25.07.84**

(51) Int. Cl.³: **C 08 G 18/08**, C 08 L 75/04, C 08 G 18/32

(21) Anmeldenummer: **81101291.3**

(22) Anmeldetag: **23.02.81**

(54) **Lösungen von Polyurethanen in Polyolen und deren Verwendung in einem Verfahren zur Herstellung von Polyurethan-Weichschaumstoffen.**

(30) Priorität: **06.03.80 DE 3008590**

(43) Veröffentlichungstag der Anmeldung: **16.09.81 Patentblatt 81/37**

(45) Bekanntmachung des Hinweises auf die Patenterteilung: **25.07.84 Patentblatt 84/30**

(84) Benannte Vertragsstaaten: **BE DE FR GB IT NL SE**

(56) Entgegenhaltungen:
**DE-A- 2 638 759**
**DE-B- 1 168 075**
**Die Akte enthält technische Angaben, die nach dem Eingang der Anmeldung eingereicht wurden und die nicht in dieser Patentschrift enthalten sind.**

(73) Patentinhaber: **BAYER AG**
**Konzernverwaltung RP Patentabteilung**
**D-5090 Leverkusen 1 Bayerwerk (DE)**

(72) Erfinder: **König, Klaus, Dr.**
**Heymannstrasse 50**
**D-5090 Leverkusen (DE)**
Erfinder: **Illger, Hans-Walter, Dr.**
**Im Tentefeld 27**
**D-5064 Rösrath (DE)**
Erfinder: **Seifert, Peter, Dr.**
**August-Kirspel-Strasse 161**
**D-5060 Bergisch Gladbach (DE)**
Erfinder: **Meyborg, Holger, Dr.**
**Bergisch Gladbacher Strasse 1**
**D-5068 Odenthal (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft Lösungen von Polyurethanen in höhermolekularen, mindestens 80 % sekundäre Hydroxylendgruppen enthaltenden Polyethern sowie die Verwendung der Lösungen als modifizierte Polyole bei der Herstellung von flammkaschierbaren und hochfrequenzverschweißbaren Polyurethan-Weichschaumstoffen.

In Polyethern dispergierte Polyurethane sind bekannt. Nach der Lehre der DE-AS 1 168 075 setzt man Diisocyanate mit difunktionellen, diprimären Alkoholen, z. B. Ethylenglykol, 1,4-Butandiol oder Neopentylglykol in situ in einem Polyether (Molekulargewicht 500 bis 3 000) als Dispergiermedium um, der mindestens zwei ausschließlich sekundäre Hydroxylgruppen im Molekül enthält. Da primäre Alkohole mit Isocyanaten schneller reagieren als sekundäre, werden nur die bifunktionellen primären Alkohole von der Polyadditionsreaktion erfaßt, während der höhermolekulare, sekundäre Hydroxylgruppen aufweisende Polyether als praktisch inertes Reaktionsmedium fungiert. Das entstehende Polyurethan fällt in Form fein dispergierter Partikel an und sedimentiert selbst nach längerem Stehen nicht.

Gemäß zwei weiteren Vorschlägen (DE-OS 2 550 796 und DE-OS 2 550 797) werden stabile Dispersionen von Polyisocyanat-Polyadditionsprodukten in Hydroxylgruppen aufweisenden Verbindungen als Dispersionsmittel durch in situ-Umsetzung von Polyisocyanaten mit den verschiedensten, gegebenenfalls ionische Gruppen aufweisenden, H-aktiven Verbindungen im Dispersionsmittel erhalten, wobei die Reaktion in Gegenwart definierter Mengen an Wasser ausgeführt wird. Unter anderem wird auch die Umsetzung von Diisocyanaten mit diprimären Diolen in Polyethern mit sekundären Hydroxylgruppen beschrieben, die zu feinteiligen Dispersionen von Polyurethanpartikeln führt.

Die drei genannten Literaturstellen beschreiben somit ausschließlich die Herstellung und Verwendung von Dispersionen von Polyisocyanat-Polyadditionsprodukten in Polyolen.

Die Verwendung von Dispersionen organischer Füllstoffe in höhermolekularen Hydroxylverbindungen als Ausgangsmaterialien für die Herstellung von Polyurethan-Kunststoffen bringt eine Reihe von Eigenschaftsverbesserungen (insbesondere ein Härtesteigerung und eine Verbesserung der Wärmestandfestigkeit unter weitgehender Beibehaltung des übrigen Eigenschaftsniveaus), jedoch sind diesen Verbesserungen (ebenso wie bei Verwendung anderer « aktiver Füllstoffe ») prinzipielle Grenzen gesetzt. Die Eigenschaften der aus Dispersionen organischer Füllstoffe in höhermolekularen Hydroxylverbindungen hergestellten Polyurethan-Kunststoffe sind mit gewissen Einschränkungen unabhängig von der chemischen Natur des Füllstoffs, sofern dessen Teilchengröße und Konzentration vergleichbar sind. So ergeben Acrylnitril-Styrol-Copolymerisate, Polyhydrazodicarbonamide, Polyharnstoffe, Harnstoff-Formaldehyd-Harze und hochschmelzende Polyester als Füllstoffe weitgehend vergleichbare Ergebnisse.

Ein größerer Einfluß auf die Kunststoffeigenschaften würde erreicht und eine bessere Möglichkeit zur Erzielung spezieller Kunststoffeigenschaften wäre dann gegeben, wenn es gelänge, die genannten höhermolekularen Zusätze homogen in das Polyurethan einzubauen. Dies scheitert jedoch im allgemeinen an deren mangelnder Löslichkeit in den für die Polyurethanherstellung verwendeten Ausgangsprodukten.

Zwar sind auch Lösungen von Polyisocyanat-Polyadditionsverbindungen in Polyolen bekannt geworden ; so werden in der DE-OS 2 638 759 Lösungen dieser Art mit Feststoffgehalten von 5 bis 70 Gew.-% beschrieben, die durch Umsetzung von Diisocyanaten mit H-aktiven Verbindungen (unter vielen anderen auch diprimären Diolen) in mehrwertigen Alkoholen mit einem Molekulargewicht zwischen 62 und 450 (in der Regel jedoch zwischen 62 und maximal ca. 200) als Reaktionsmedium erhalten werden, bzw. auch durch nachträgliches Auflösen der pulverisierten, separat hergestellten Polyadditionsverbindungen in den genannten mehrwertigen Alkoholen.

Solche Lösungen können zwar bei der Herstellung von Polyurethankunststoffen als Ausgangsmaterialien vielfach Verwendung finden, für die Herstellung von weichen Elastomeren, flexiblen Überzügen und Weichschaumstoffen sind sie jedoch ungeeignet, weil das Einbringen nennenswerter Mengen der Polyadditionsverbindung in die Polyurethanrezeptur nur möglich ist, wenn gleichzeitig verhältnismäßig große Mengen der als Lösungsmittel dienenden, mehrwertigen niedermolekularen Alkohole mitverwendet werden, was zu einer unerwünschten Versprödung der Polyurethankunststoffe führt.

Es wurde nun überraschend gefunden, daß man durch Umsetzung von Diisocyanaten mit diprimären Diolen in höhermolekularen Polyethern mit überwiegend sekundären Hydroxylgruppen klare Lösungen von Polyurethanen in den höhermolekularen Polyethern erhält, wenn die verwendeten diprimären Diole die im folgenden näher beschriebenen Strukturmerkmale aufweisen.

Weiterhin wurde überraschend gefunden, daß aus derartigen Lösungen insbesondere Polyurethan-Schaumstoffe hergestellt werden können, die hervorragend flammkaschierbar und hochfrequenzverschweißbar sind und darüber hinaus ein ausgezeichnetes Gesamteigenschaftsniveau aufweisen. Bei Verwendung der weiter unten beschriebenen speziellen Lösungen entstehen völlig offenzellige, « in situ retikulierte » d. h. direkt bei der Herstellung in völlig offenzelliger Form vorliegende Polyurethan-Weichschaumstoffe mit hervorragenden Eigenschaften.

Gegenstand der Erfindung sind somit Lösungen von

A) 3 bis 60 Gew.-%, vorzugsweise 5 bis 30 Gew.-%, bezogen auf A) + B), an Umsetzungsprodukten von

a) Polyisocyanaten mit

b) diprimären Diolen des Molekulargewichts 90 bis 800, vorzugsweise 104 bis 500, welche an beiden Hydroxylgruppen die Struktur

$$HO-CH_2-\overset{R_1}{\underset{R_2}{C}}-$$

aufweisen, in welcher

$R_1$ Chlor, einen Alkyl-, Cycloalkyl-, Aralkyl- oder Arylrest mit 1 bis 10 Kohlenstoffatomen bedeutet, der durch Chlor, Estergruppen, Ethergruppen, Amidgruppen, Urethangruppen oder Nitrilgruppen substituiert bzw. unterbrochen sein kann,

$R_2$ einen Rest wie $R_1$ oder Wasserstoff bedeutet, wobei $R_1$ und $R_2$ gleich oder verschieden sein können,

c) gegebenenfalls bis zu 50 Mol-%, bezogen auf die Diole b), an Diolen des Molekulargewichts 104 bis 800, welche die genannte Struktureinheit nur einmal aufweisen, sowie

d) gegebenenfalls bis zu 20 Mol-%, bezogen auf die Diole b), an weiteren mono-, di- oder polyfunktionellen Alkoholen,

wobei das NCO/OH-Verhältnis zwischen 0,2 und 1,2 liegt, in

B) mindestens zwei Hydroxylgruppen aufweisenden Polyethern mit einem mittleren Molekulargewicht von 500 bis 12 000, vorzugsweise 1 000 bis 8 000, bei denen mindestens 80 %, vorzugsweise mindestens 90 %, der Hydroxylgruppen sekundär sind,

wobei jedoch Lösungen der Umsetzungsprodukte von Diisocyanaten mit 2,2-Dimethyl-propandiol-1,3 ausgenommen sind.

Gegenstand der Erfindung ist weiterhin ein Verfahren zur Herstellung von flammkaschierbaren und hochfrequenzverschweißbaren Polyurethan-Weichschaumstoffen durch Umsetzung von Polyisocyanaten mit mindestens zwei Hydroxylgruppen aufweisenden, höhermolekularen Verbindungen, gegebenenfalls weiteren höher- und/oder niedermolekularen Verbindungen mit gegenüber Isocyanaten reaktiven Wasserstoffatomen und Wasser, gegebenenfalls unter Mitverwendung von anderen Treibmitteln, Katalysatoren, Schaumstabilisatoren und anderen Zusatzstoffen, dadurch gekennzeichnet, daß als höhermolekulare Verbindung ausschließlich oder anteilweise

A) 3 bis 60 Gew.-%, vorzugsweise 5 bis 30 Gew.-%, bezogen auf A) + B), an Umsetzungsprodukten von

a) Polyisocyanaten mit

b) diprimären Diolen des Molekulargewichts 90 bis 800, vorzugsweise 104 bis 500, welche an beiden Hydroxylgruppen die Struktur

$$HO-CH_2-\overset{R_1}{\underset{R_2}{C}}-$$

aufweisen, in welcher

$R_1$ Chlor, einen Alkyl-, Cycloalkyl-, Aralkyl- oder Arylrest mit 1 bis 10 Kohlenstoffatomen bedeutet, der durch Chlor, Estergruppen, Ethergruppen, Amidgruppen, Urethangruppen oder Nitrilgruppen substituiert bzw. unterbrochen sein kann,

$R_2$ einen Rest wie $R_1$ oder Wasserstoff bedeutet, wobei $R_1$ und $R_2$ gleich oder verschieden sein können,

c) gegebenenfalls bis zu 50 Mol-%, bezogen auf die Diole b), an Diolen des Molekulargewichts 104 bis 800, welche die genannte Struktureinheit nur einmal aufweisen, sowie

d) gegebenenfalls bis zu 20 Mol-%, bezogen auf die Diole b), an weiteren mono-, di- oder polyfunktionellen Alkoholen,

wobei das NCO/OH-Verhältnis zwischen 0,2 und 1,2 liegt, in

B) mindestens zwei Hydroxylgruppen aufweisenden Polyethern mit einem mittleren Molekulargewicht von 500 bis 12 000, vorzugsweise 1 000-8 000, bei denen mindestens 80 %, vorzugsweise mindestens 90 % der Hydroxylgruppen sekundär sind,

verwendet werden.

Wie schon erwähnt, werden gemäß einer speziellen Variante des erfindungsgemäßen Verfahrens völlig offenzellige « in situ retikulierte » Weichschaumstoffe hergestellt.

Zur Herstellung der erfindungsgemäßen Lösungen kommen als Polyisocyanate a) aliphatische, cycloaliphatische, araliphatische, aromatische und heterocyclische Polyisocyanate in Betracht, wie sie z. B. von W. Siefken in Justus Liebigs Annalen der Chemie, 562, Seiten 75 bis 136, beschrieben werden, beispielsweise solche der Formel

$$Q(NCO)_n$$

in der

n 2 bis 4, vorzugsweise 2,

und

Q einen aliphatischen Kohlenwasserstoffrest mit 2 bis 18, vorzugsweise 6 bis 10, C-Atomen, einen cycloaliphatischen Kohlenwasserstoffrest mit 4 bis 15, vorzugsweise 5 bis 10, C-Atomen, einen aromatischen Kohlenwasserstoffrest mit 6 bis 15, vorzugsweise 6 bis 13, C-Atomen, oder einen araliphatischen Kohlenwasserstoffrest mit 8 bis 15, vorzugsweise 8 bis 13, C-Atomen,

bedeuten, z. B. Ethylen-diisocyanat, 1,4-Tetramethylendiisocyanat, 1,6-Hexamethylendiisocyanat, 1,12-Dodecandiisocyanat, Cyclobutan-1,3-diisocyanat, Cyclohexan-1,3- und -1,4-diisocyanat sowie beliebige Gemische dieser Isomeren, 1-Isocyanato-3,3,5-trimethyl-5-isocyanatomethyl-cyclohexan (DE-Auslegeschrift 1 202 785, US-Patentschrift 3 401 190), 2,4- und 2,6-Hexahydrotoluylendiisocyanat sowie beliebige Gemische dieser Isomeren, Hexahydro-1,3- und/oder -1,4-phenylendiisocyanat, Perhydro-2,4'- und/oder -4,4'-diphenylmethandiisocyanat, 1,3- und 1,4-Phenylendiisocyanat, 2,4- und 2,6-Toluylendiisocyanat sowie beliebige Gemische dieser Isomeren, Diphenylmethan-2,4'- und/oder -4,4'-diisocyanat, Naphthylen-1,5-diisocyanat.

Ferner kommen beispielsweise erfindungsgemäß in Frage: Triphenylmethan-4,4',4''-triisocyanat, Polyphenyl-polymethylenpolyisocyanate, wie sie durch Anilin-Formaldehyd-Kondensation und anschließende Phosgenierung erhalten und z. B. in den GB-Patentschriften 874 430 und 848 671 beschrieben werden, m- und p-Isocyanatophenylsulfonyl-isocyanate gemäß der US-Patentschrift 3 454 606, perchlorierte Arylpolyisocyanate, wie sie z. B. in der DE-Auslegeschrift 1 157 601 (US-Patentschrift 3 277 138) beschrieben werden, Carbodiimidgruppen aufweisende Polyisocyanate, wie sie in der DE-Patentschrift 1 092 007 (US-Patentschrift 3 152 162) sowie in den DE-Offenlegungsschriften 2 504 400, 2 537 685 und 2 552 350 beschrieben werden, Norbornan-Diisocyanate gemäß US-Patentschrift 3 492 330, Allophanatgruppen aufweisende Polyisocyanate, wie sie z. B. in der GB-Patentschrift 994 890, der BE-Patentschrift 761 626 und der NL-Patentanmeldung 7 102 524 beschrieben werden, Isocyanuratgruppen aufweisende Polyisocyanate, wie sie z. B. in der US-Patentschrift 3 001 973, in den DE-Patentschriften 1 002 789, 1 222 067 und 1 027 394 sowie in den DE-Offenlegungsschriften 1 929 034 und 2 004 048 beschrieben werden, Urethangruppen aufweisende Polyisocyanate, wie sie z.B. in der BE-Patentschrift 752 261 oder in den US-Patentschriften 3 394 164 und 3 644 457 beschrieben werden, acylierte Harnstoffgruppen aufweisende Polyisocyanate gemäß der DE-Patentschrift 1 230 778, Biuretgruppen aufweisende Polyisocyanate, wie sie z. B. in den US-Patentschriften 3 124 605, 3 201 372 und 3 124 605 sowie in der GB-Patentschrift 889 050 beschrieben werden, durch Telomerisationsreaktionen hergestellte Polyisocyanate, wie sie z. B. in der US-Patentschrift 3 654 106 beschrieben werden, Estergruppen aufweisende Polyisocyanate, wie sie z. B. in den GB-Patentschriften 965 474 und 1 072 956, in der US-Patentschrift 3 567 763 und in der DE-Patentschrift 1 231 688 genannt werden, Umsetzungsprodukte der obengenannten Isocyanate mit Acetalen gemäß der DE-Patentschrift 1 072 385 und polymere Fettsäureester enthaltende Polyisocyanate gemäß der US-Patentschrift 3 455 883.

In untergeordneter Menge können auch Monoisocyanate, vor allem in Kombination mit polyfunktionellen, beispielsweise tri- und tetrafunktionellen, Isocyanaten eingesetzt werden.

Bevorzugte Isocyanate für die Herstellung der erfindungsgemäßen Lösungen sind die isomeren Toluylendiisocyanate und Diphenylmethandiisocyanate, Hexamethylendiisocyanat und 1-Isocyanato-3,3,5-trimethyl-5-isocyanatomethylcyclohexan oder Gemische der genannten Isocyanate. 2,4- und/oder 2,6-Toluylendiisocyanat sind besonders bevorzugt.

Anteilig bis zu ca. 30 Mol-% der Komponente a) mitverwendbare, jedoch im allgemeinen weniger bevorzugte, Ausgangskomponenten sind auch sogenannte NCO-Präpolymere, also endständige Isocyanatgruppen aufweisende Umsetzungsprodukte aus höher- und/oder niedermolekularen Verbindungen mit mindestens zwei gegenüber Isocyanaten reaktionsfähigen Wasserstoffatomen und einem Überschuß an Polyisocyanat. Höhermolekulare Verbindungen mit mindestens zwei gegenüber Isocyanaten reaktionsfähigen Wasserstoffatomen (Molekulargewicht ca. 400 bis 2 000) sind neben Aminogruppen, Thiolgruppen oder Carboxylgruppen aufweisenden Verbindungen vorzugsweise Polyhydroxylverbindungen, insbesondere zwei bis vier Hydroxylgruppen aufweisende Polyester, Polyether, Polythioether, Polyacetale, Polycarbonate und Polyesteramide, wie sie für die Herstellung von homogenen und zellförmigen Polyurethanen an sich bekannt sind. Derartige Verbindungen sind z. B. in den schon eingangs erwähnten Deutschen Offenlegungsschriften 2 550 796, 2 550 797 und 2 638 759 sowie z. B. auch den Deutschen Offenlegungsschriften 2 624 527, 2 302 564 (US-PS 3 963 679), 2 402 840 (US-PS 3 984 607), 2 457 387 (US-PS 4 035 213), 2 829 670, 2 830 949 und 2 830 953 ausführlich beschrieben.

Für die Herstellung von NCO-Präpolymeren kommen gegebenenfalls auch Verbindungen mit mindestens zwei gegenüber Isocyanaten reaktionsfähigen Wasserstoffatomen von einem Molekulargewicht 32 bis 400 in Frage. Auch in diesem Fall versteht man hierunter Hydroxylgruppen und/oder Aminogruppen und/oder Thiolgruppen und/oder Carboxylgruppen aufweisende Verbindungen, vorzugsweise Hydroxylgruppen aufweisende Verbindungen, wie sie als Kettenverlängerungsmittel oder Vernetzungsmittel bekannt sind und in den obengenannten Druckschriften beschrieben werden. Diese

Verbindungen weisen in der Regel 2 bis 4 gegenüber Isocyanaten reaktionsfähige Wasserstoffatome auf, vorzugsweise 2 oder 3 reaktionsfähige Wasserstoffatome.

Die erfindungsgemäßen Lösungen von Polyurethanen in höhermolekularen Polyethern können direkt durch Umsetzung von Polyisocyanaten a) der vorgenannten Art im Polyether B) (z. B. nach der Arbeitsweise von DE-AS 1 168 075 oder DE-OS 2 638 759) mit diprimären Diolen b), die das oben definierte Strukturmerkmal an beiden Hydroxylgruppen aufweisen, hergestellt werden. Beispiele für solche Diole sind :

1. In 2-Stellung disubstituierte 1,3-Propandiole wie 2,2-Dichlor-1,3-propandiol, 2-Methyl-2-ethyl-1,3-propandiol, 2,2-Diethyl-1,3-propandiol, 2,2-Dichlormethyl-1,3-propandiol, 2-Methyl-2-isopropyl-1,3-propandiol, 2-Methyl-2-chlormethyl-1,3-propandiol, 2-Ethyl-2-chlormethyl-1,3-propandiol, 2,2-Diisopropyl-1,3-propandiol, sowie Homologe mit höheren Substituenten $R_1$ und/oder $R_2$ der eingangs beschriebenen Art.

2. In 2-Stellung monosubstituierte 1,3-Propandiole wie 2-Chlor-1,3-propandiol, 2-Methyl-, 2-Chlormethyl-, 2-Ethyl-, 2-Isopropyl-, 2-Cyclohexyl-, 2-Phenyl-1,3-propandiol und homologe Verbindungen.

3. Verbindungen, die sich von 1,1,1-Tris-hydroxymethylalkanen wie Trimethylolethan und -propan in der Weise ableiten, daß eine OH-Gruppe mit Monoisocyanaten zu Urethanen oder mit Monocarbonsäuren zu Estern umgesetzt ist, sowie zweifach umgesetzte Derivate des Pentaerythrits. Dabei ist es nicht erforderlich, daß die reinen Verbindungen vorliegen, sondern es sind auch statistische Gemische verwendbar, wie sie bei der 1 : 1- bzw. 1 : 2-Umsetzung anfallen. Als für die Umsetzung verwendbare Monoisocyanate seien genannt : Methyl-, Ethyl-, Isopropyl-, Butyl-, Cyclohexyl-, ω-Chlorhexyl-, Isooctyl-, Stearyl-, Phenylisocyanat sowie durch Chlor und/oder Methylgruppen substituierte Phenylisocyanate.

Als Monocarbonsäuren seien genannt : Ameisensäure, Essigsäure, Propionsäure, Acrylsäure, Methacrylsäure, Buttersäure, 2-Ethylhexansäure, Stearinsäure, Ölsäure, Cyclohexancarbonsäure und Benzoesäure sowie Substitutionsprodukte der letzteren.

4. Niedermolekulare (Molekulargewichte bis 800), Hydroxylendgruppen aufweisende Kondensate der vorgenannten Verbindungen 1 bis 3 mit einer Dicarbonsäure wie z. B. Oxalsäure, Malonsäure, Bernsteinsäure, Glutarsäure, Adipinsäure, Azelainsäure, Sebacinsäure, Phthalsäure, Isophthalsäure und 3-Hydroxy-2,2-dimethylpropionsäure (Hydroxypivalinsäure), wobei selbstverständlich sowohl Gemische der Verbindungen 1 bis 3 als auch Gemische der genannten Säuren zum Einsatz kommen können. Bevorzugt sind niedermolekulare Polyadipate des Neopentylglykols sowie der 3-Hydroxy-2,2-dimethylpropionsäure-3-hydroxy-2,2-dimethyl-propylester (Hydroxypivalinsäure-neopentylglykolester).

Bevorzugte Diole b) sind solche des Typs 1 und 4 sowie das Umsetzungsprodukt von Trimethylolpropan und ω-Chlorhexylisocyanat.

Ein bevorzugtes Diol (b) beim erfindungsgemäßen Verfahren ist das Neopentylglykol.

Erfindungsgemäß können bei der Herstellung des gelösten Polyurethans bis zu 50 Mol-% an Diolen mitverwendet werden, die das vorstehend beschriebene Strukturmerkmal nur an einer Hydroxylgruppe aufweisen. Beispiele für solche Diole sind : 3-Chlor-1,2-propandiol, 2-Ethyl-1,3-hexandiol, 2,2,4-Trimethyl-1,3-pentandiol, 2,2,4- und 2,4,4-Trimethyl-1,6-hexandiol.

Weniger bevorzugt ist die Mitverwendung von bis zu 20 Mol-% (bezogen auf Diole b)) von anderen mono-, di- oder polyfunktionellen Alkoholen, da in manchen Fällen unerwünschte Trübungen der Polyurethan-Lösungen verursacht werden. Ein solcher Zusatz kann jedoch Bedeutung erlangen, wenn spezielle Gruppierungen, wie z. B. tertiäre Aminogruppen oder Verzweigungsstellen eingebracht werden sollen.

Die erfindungsgemäßen Polyurethan-Lösungen entstehen wie schon erwähnt direkt durch Umsetzung der vorstehend beschriebenen Isocyanate mit den vorstehend beschriebenen Diolen in mindestens zwei (vorwiegend sekundäre) Hydroxylgruppen aufweisenden Polyethern mit einem mittleren Molekulargewicht von 500 bis 12 000, vorzugsweise 1 000 bis 8 000, als Reaktionsmedium und Lösungsmittel. Derartige Polyether werden in an sich bekannter Weise, z. B. durch alkalisch katalysierte Polymerisation von Propylenoxid, gegebenenfalls unter Mitverwendung von bis zu 30 Mol-% Ethylenoxid, auf Starterverbindungen mit reaktionsfähigen Wasserstoffatomen hergestellt. Geeignete Starterverbindungen sind z. B. : Wasser, Ethylenglykol, Propylenglykol-1,2 oder -1,3, Butylenglykol-1,2, -1,3 oder -1,4, Hexandiol-1,6, Octandiol-1,8, Neopentylglykol, 1,4-Bishydroxymethylcyclohexan, 2-Methyl-1,3-propandiol, Glycerin, Trimethylolethan und -propan, Pentaerythrit, Mannit, Sorbit, Formit, Rohrzukker, Resorcin, Hydrochinon, 2,2-Bis-(4-hydroxyphenyl)-propan, Ammoniak, Methylamin, Ethylendiamin, Tetra- oder Hexamethylendiamin, Ethanolamin, Diethanolamin, Triethanolamin, Anilin, 2,4- und 2,6-Diaminotoluol und Polyphenyl-polymethylenpolyamine, wie sie durch Anilin-Formaldehydkondensation erhalten werden sowie Mischungen der genannten Verbindungen. Als Starter kommen darüber hinaus auch harzartige Materialien des Novolak- und Resoltyps in Frage.

Enthalten die verwendeten Polyether B) wesentliche Anteile an primären OH-Gruppen, so treten diese bei der Polyadditionsreaktion in Konkurrenz zu den obengenannten Diolen, was zu einer Mitreaktion der Polyether unter unerwünschter starker Viskositätserhöhung führt. Es kommen daher erfindungsgemäß nur solche Polyether zum Einsatz, deren Hydroxylgruppen zu mindestens 80 %, vorzugsweise zu mindestens 90 %, sekundär sind. Aus diesem Grunde werden einzusetzende Polyether, die Ethylenoxid enthalten sollen, so hergestellt, daß dieses entweder alleine oder im Gemisch mit

Propylenoxid am Anfang der Polymerisation an den Starter addiert wird, während am Ende vorwiegend reines Propylenoxid aufpolymerisiert wird.

Die Umsetzung der primären Hydroxylverbindungen mit den Isocyanaten in den höhermolekularen, vorwiegend sekundäre Hydroxylgruppen enthaltenden Polyethern geschieht nach bekannten Verfahren bei Temperaturen von 0 bis 180 °C, vorzugsweise 30 bis 150 °C. Zum Beispiel kann die Hydroxylkomponente im Polyether vorgelegt und das Isocyanat entweder auf einmal oder nach und nach zugegeben werden, wobei man durch äußere oder innere Kühlung für Temperaturkonstanz sorgt. In vielen Fällen ist es aber auch zulässig, ohne Kühlung zu arbeiten, und die Temperatur der Reaktionsmischung durch die exotherme Reaktion ansteigen zu lassen. Eine andere Verfahrensweise besteht darin, daß man beide Reaktionspartner aus getrennten Dosiervorrichtungen unter Rühren dem Polyether zuführt, wobei die OH-Komponente vorzugsweise einen Vorlauf erhält, damit eine Reaktion des Polyethers mit dem Isocyanat weitgehend vermieden wird. Selbstverständlich sind auch kontinuierliche Verfahren zur Herstellung der erfindungsgemäßen Lösungen möglich, etwa in der Weise, daß man eine gegebenenfalls vorerhitzte Lösung der Hydroxyl-Komponente im Polyether mit dem Isocyanat in einem statischen oder dynamischen Durchlaufmischer vereinigt und das Reaktionsgemisch von dort in ein nachgeschaltetes Ausrührgefäß fördert, in dem die Reaktion beendet wird. Auch Rührkesselkaskaden oder Zellarreaktoren sind für die kontinuierliche Durchführung der Polyadditionsrreaktion geeignet.

Die Reaktion kann gewünschtenfalls mit in der Polyurethanchemie an sich bekannten und üblichen Katalysatoren beschleunigt werden. Solche Katalysatoren sind z. B. tertiäre Amine, Amidine, Metallhydroxide, -alkoholate, -phenolate oder -carboxylate sowie Carboxylate und Chelate der Übergangsmetalle.

Das stöchiometrische Verhältnis zwischen Isocyanaten und primären Hydroxylverbindungen (NCO/OH-Verhältnis) kann in weiten Grenzen variiert werden, nämlich zwischen 0,20 und 1,2. Ist der Überschuß an Hydroxylverbindung sehr groß, so bleibt natürlich ein Großteil unumgesetzt und die Kettenlänge der entstehenden Polyurethane ist sehr gering. Wird hingegen Isocyanat im Überschuß eingesetzt, so reagiert dieser zwangsläufig mit den Hydroxylgruppen des Polyethers, was zu einer starken Viskositätserhöhung führt. Aus diesen Gründen sind bei der Herstellung der erfindungsgemäßen Lösungen NCO/OH-Verhältnisse zwischen 0,5 und 1,0 bevorzugt.

Der Gehalt der Lösungen an Polyurethan wird durch die bei der Reaktion gewählten Mengenverhältnisse vorgegeben und kann 3 bis 60 Gew.-% betragen. Bevorzugt sind Konzentrationen von 5 bis 30 %, weil einerseits solche unter 5 % nur unwesentliche Eigenschaftsveränderungen in den aus den Lösungen hergestellten Polyurethankunststoffen bewirken, andererseits aber Gehalte über 30 % häufig für die Verarbeitung störende hohe Viskositäten bewirken.

Die erfindungsgemäßen Lösungen werden als modifizierte Polyether bei der Herstellung von zellförmigen Polyurethan-Weichschaumstoffen mit verbesserten mechanischen Eigenschaften verwendet. Sie können überall dort eingesetzt werden, wo bisher beim Aufbau von Polyurethanen höhermolekulare Polyether, wie sie als Reaktionsmedium für die erfindungsgemäßen Polyurethanlösungen beschrieben wurden, verwendet werden.

Zur Verschäumung gelangen zweckmäßigerweise Lösungen mit einem Gehalt an gelöstem Polyurethan (A) in den Polyethern (B), daß der Gehalt von (A) in der Mischung aus A + B weniger als 20 Gew.-%, besser weniger als 15 Gew.-% und vorzugsweise zwischen 5 und 10 Gew.-% beträgt. Diese Polyurethangehalte werden im allgemeinen dadurch eingestellt, daß man entsprechende Mengen der polyurethanhaltigen Lösungen mit weiteren Polyetherpolyolen mischt. Es müssen dabei aus technischen Gründen die Konzentrationen der Polyurethane (A) in der polyurethanhaltigen Polyetherpolyollösungen so eingestellt werden, daß diese Mischungen eine Viskosität (25 °C) unter 20 000 mPa.s, besser unter 10 000 mPa.s ergeben, was in den meisten Fällen zu den obigen Konzentrationsgrenzen führt. Diese Konzentrations-/Viskositätsgrenzen ergeben sich unter anderem aus den Molekulargewichten der Polyurethane und eventuellen kettenaufbauenden Nebenreaktionen der Isocyanate und können somit gesteuert werden.

Die oben angegebenen Viskositätsgrenzen spielen bei anderen Anwendungen, zum Beispiel auf dem Lackgebiet, keine so entscheidende Rolle und können dort auch höher sein.

Bei der erfindungsgemäßen Herstellung von Polyurethan-Weichschaumstoffen kommen als Ausgangskomponente neben den erfindungsgemäßen Lösungen die bereits oben erwähnten Polyisocyanate, weitere höhermolekulare Verbindungen mit gegenüber Isocyanaten reaktiven Gruppen sowie gegebenenfalls niedermolekulare Vernetzer (in der Regel hydroxy- oder aminofunktionelle Verbindungen) in Frage. Alle diese Verbindungen werden in den oben zitierten Druckschriften eingehend beschrieben.

Erfindungsgemäß dienen die Polyurethanlösungen zur problemlosen Herstellung von Polyurethan-Weichschaumstoffen, die in hervorragender Weise sowohl flammkaschierbar als auch hochfrequenzverschweißbar sind.

Urethangruppen aufweisende Schaumstoffe, die durch Umsetzung von Polyisocyanaten mit Polyetherpolyolen und/oder Polyesterpolyolen erhalten werden, sind bekannt und finden weite Anwendung. Die Anwendungsmöglichkeiten der geschäumten Polyurethane werden indes durch deren nicht oder höchstens ungenügend vorhandene Hochfrequenzverschweißbarkeit sowie aufgrund fehlender Flammkaschierbarkeit in manchen Bereichen stark eingeschränkt. Einsatzgebiete, wo diese Eigenschaften besonders geschätzt werden, sind beispielsweise die Herstellung der Türverkleidung bei Automobilen, die die Verschweißung von Schaumstoff-Folien mit sich selbst oder mit anderen Werkstoffen erfordert, die Erzeugung von Steppeffekten oder die Herstellung von Formkörpern. Weiterhin werden durch

Flammkaschierung Verbundsysteme mit Textilien z. B. als Polsterauflagen hergestellt, die nachträglich durch Hochfrequenzverschweißung profiliert und/oder verformt werden.

Es ist bekannt, Urethangruppen aufweisende Schaumstoffe, die hochfrequenzverschweißbar sind, aus Verbindungen mit aktiven Wasserstoffatomen, Polyisocyanaten, Wasser und/oder anderen Treibmitteln in Gegenwart von Emulgatoren, Stabilisatoren, Katalysatoren sowie anderer Hilfsmittel und von Zusätzen zur Erzielung einer Hochfrequenzverschweißbarkeit herzustellen oder die fertigen Schaumstoffe durch Nachbehandlung hochfrequenzverschweißbar zu machen.

Als hochfrequenzverschweißbarmachende Stoffe sind pulverisierte Polyvinylacetate, Polyvinylchloride bzw. Copolymere (BE-PS 719 875), thermoplastische Polymerisate, wie z. B. Ethylenvinylacetat, spezielle Polyamide, Cellulosederivate wie z. B. Ethyl- oder Benzylcellulose, Acrylatpolymerisate, Polyethylen (DE-OS 1 767 583) und ähnliche bekannt geworden.

Durch Zugabe von wasserlöslichen anorganischen oder organischen Salzen, z. B. von Natriumthiosulfat oder Natriumacetat (DE-OS 1 669 888) kann die Hochfrequenzverschweißbarkeit von Polyurethanschaumstoffen ebenfalls gesteigert werden. Eine Verbesserung der Hochfrequenzverschweißbarkeit von Urethangruppen aufweisenden Schaumstoffen durch nachträgliche Modifizierung ist beispielsweise in den französischen Patentschriften 1 329 849, 1 344 444 und 1 343 681 beschrieben.

Die Zugabe von Pulvern oder in organischen Lösungsmitteln gelösten Thermoplasten zu den Ausgangskomponenten der Polyurethanherstellung ist mit Nachteilen verbunden. Um einen sichtbaren Effekt zu erzielen, müssen größere Mengen eingesetzt werden, was beispielsweise infolge einer starken Viskositätserhöhung technische Probleme mit sich bringt und zu Produktionsschwierigkeiten führt. Die Schaumstoffe selbst werden durch diese Produkte in ihren Eigenschaften negativ beeinflußt. Die nachträgliche Imprägnierung der fertigen Schaumstoffe ist auch nicht problemlos. Es ist beispielsweise sehr aufwendig, Schaumstoffe größerer Dicke zu imprägnieren. Außerdem ist die Entfernung des Lösungsmittels und die Trocknung der nachbehandelten Schaumstoffe generell mit erhöhtem technischem Aufwand verbunden. Zudem stellt eine Nachbehandlung einen zusätzlichen Verarbeitungsschritt dar.

Von den gesamten beschriebenen Methoden, die dem heutigen Stand der Technik entsprechen, kann gesagt werden, daß sie mit größerem technischem und finanziellem Aufwand verbunden sind und zu Schaumstoffen mit schlechteren Eigenschaften führen. Darüber hinaus sind derartige Schaumstoffe, sofern es sich um Polyetherschaumstoffe handelt, nicht ohne weiteres flammkaschierbar, sondern müssen zu diesem Zweck bei ihrer Verschäumung mit Zusätzen wie beispielsweise Derivaten der phosphorigen oder Phosphorsäure versehen werden.

Der Einsatz der erfindungsgemäßen Lösungen bei der Herstellung von Polyurethanweichschaumstoffen vermeidet die oben angeführten Nachteile und erbringt die gewünschten Eigenschaften der Flammkaschierbarkeit und Hochfrequenzverschweißbarkeit in hervorragender Weise.

Erfindungsgemäße Polyurethanlösungen, die durch Umsetzung von Diolen des oben beschriebenen Typs 4 mit 0,2 bis 0,7 vorzugsweise 0,25-0,5 Äquivalenten Polyisocyanat in Polyethern mit überwiegend sekundären Hydroxylgruppen hergestellt wurden, sind insbesondere zur problemlosen Herstellung von völlig offenzelligen, « in situ retikulierten » Polyurethan-Weichschaumstoffen geeignet.

Die Offenzelligkeit der nach üblichen Verfahren hergestellten Polyurethan-Weichschäume ist nicht für alle Zwecke ausreichend. Für Filtermaterialien oder als Ausgangsmaterial für imprägnierte Schaumstoffe wird ein vollständig offenzelliger, membranfreier Weichschaumstoff benötigt.

Methoden, solche sogenannten « retikulierten » Schaumstoffe herzustellen, sind bekannt. Das älteste Verfahren besteht in der nachträglichen Behandlung mit Natronlauge, die die Membranen zwischen den Zellen auflöst. Hierbei werden aber natürlich auch die Zellstege geschädigt. Außerdem muß die Natronlauge sorgfältig ausgewaschen werden. Ein anderes Verfahren ist das Explosionsverfahren. Durch Zündung eines explosionsfähigen Gasgemisches, das man vorher in den Schaum eindringen ließ, werden die verbliebenen Membranen zerstört. Das Verfahren macht einen zusätzlichen Arbeitsgang notwendig und ist nicht auf beliebig große Teile anwendbar.

Ein Verfahren, völlig offenzellige Schaumstoffe ohne Nachbehandlung herzustellen, ist in den Deutschen Offenlegungsschriften 2 210 721 und 2 454 049 beschrieben. Hiernach wird ein membranfreier, « retikulierter » Schaumstoff durch Verschäumung einer Mischung aus etwa 20 Teilen Polyetherpolyol und 80 Teilen Polyesterpolyol hergestellt. In der Produktion hat dieses Verfahren jedoch erhebliche Nachteile. Die Zellgröße ist schwierig regulierbar und die Blockdimension ist durch die geringe Stabilität des Systems begrenzt. Die geringen Härtewerte des so hergestellten Schaumstoffs stehen auf einigen Gebieten dem Einsatz entgegen.

Bei Verwendung von erfindungsgemäßen Lösungen der oben beschriebenen speziellen Art werden alle die genannten Nachteile vermieden. Es werden durch problemlose direkte Blockverschäumung und ohne Nachbehandlung völlig offenzellige Schaumstoffe mit guten physikalischen Eigenschaften erhalten, wobei die Zellgröße sich innerhalb der üblichen Grenzen durch Variation des Mischkammerdrucks verändern läßt.

Bei der erfindungsgemäßen Herstellung von Weichschaumstoffen werden neben den schon genannten Ausgangskomponenten Wasser und/oder andere Treibmittel, Aktivatoren und gegebenenfalls weitere Hilfs- und Zusatzmittel mitverwendet, wie sie ebenfalls den oben angegebenen Druckschriften zu entnehmen sind.

Die Reaktionskomponenten werden erfindungsgemäß nach dem an sich bekannten Einstufenverfahren, dem Prepolymerverfahren oder dem Semiprepolymerfahren zur Umsetzung gebracht, wobei man sich oft maschineller Einrichtungen bedient, z. B. solcher, die in der amerikanischen Patentschrift 2 764 565 beschrieben werden. Einzelheiten über Verarbeitungseinrichtungen, die auch erfindungsgemäß in Frage kommen, werden im Kunststoff-Handbuch, Band VII, herausgegeben von Vieweg und Höchtlen, Carl-Hanser-Verlag, München 1966, z. B. auf den Seiten 121 bis 205 beschrieben.

Bei der erfindungsgemäßen Schaumstoffherstellung wird die Verschäumung oft in Formen durchgeführt. Dabei wird das Reaktionsgemisch in eine Form eingetragen. Als Formmaterial kommt Metall, z. B. Aluminium, oder Kunststoff, z. B. Epoxidharz, in Frage. In der Form schäumt das schäumfähige Reaktionsgemisch auf und bildet den Formkörper. Die Formverschäumung kann dabei so durchgeführt werden, daß das Formteil an seinder Oberfläche Zellstruktur aufweist, es kann aber auch so durchgeführt werden, daß das Formteil eine kompakte Haut und einen zelligen Kern aufweist. Erfindungsgemäß kann man in diesem Zusammenhang so vorgehen, daß man in die Form so viel schäumfähiges Reaktionsgemisch einträgt, daß der gebildete Schaumstoff die Form gerade ausfüllt. Man kann aber auch so arbeiten, daß man mehr schäumfähiges Reaktionsgemisch in die Form einträgt, als zur Ausfüllung des Forminneren mit Schaumstoff notwendig ist. Im letztgenannten Fall wird somit unter « overcharging » gearbeitet ; eine derartige Verfahrensweise ist z. B. aus den amerikanischen Patentschriften 3 178 490 und 3 182 104 bekannt.

Bei der Formverschäumung werden vielfach an sich bekannte « äußere Trennmittel », wie Siliconöle, mitverwendet. Man kann aber auch sogenannte « innere Trennmittel », gegebenenfalls im Gemisch mit äußeren Trennmitteln, verwenden, wie sie z. B. aus den Deutschen Offenlegungsschriften 2 121 670 und 2 307 589 bekanntgeworden sind.

Erfindungsgemäß lassen sich auch kalthärtende Schaumstoffe herstellen (vgl. britische Patentschrift 1 162 517, Deutsche Offenlegungsschrift 2 153 086).

Selbstverständlich können aber auch Schaumstoffe durch Blockverschäumung oder nach dem an sich bekannten Doppeltransportbandverfahren hergestellt werden.

Die nachfolgenden Beispiele dienen der Erläuterung der Erfindung. Wenn nicht anders vermerkt, sind Mengenangaben als Gewichtsteile bzw. Gewichtsprozente zu verstehen.

1) Herstellung von Polyurethanlösungen

Beispiel $A_1$

208 g (2 Mol) Neopentylglykol wurden bei 70 °C in 1945,6 g Polyether I vorgelegt und im Verlauf von 80 min 278,4 g TDI 80 unter gutem Rühren zugetropft. (NCO/OH-Verhältnis 0,8.) Nach einer weiteren Stunde bei 100 °C waren keine NCO-Gruppen mehr nachzuweisen. Man erhielt eine homogene, klar durchsichtige, 20 %ige Polyurethanlösung mit einer errechneten OH-Zahl von 54,4. Die Viskosität betrug 10 700 mPas bei 25 °C.

Die folgenden Beispiele wurden weitgehend analog unter Variation von Polyether, Diol, Isocyanat, Katalyse, NCO/OH-Verhältnis, Reaktionszeit und -temperatur hergestellt. Sie sind deshalb in einer Tabelle zusammengefaßt.

Diejenigen Polyurethanlösungen, die die Addukte von Neopentylglykol und Diisocyanaten enthalten, gehören zum Stand der Technik.

(Siehe Tabelle, Seite 9 f.)

| Beisp.-Nr. | Poly-ether | Diol | Isocya-nat | NCO/OH-Verh. | Polyurethan-Gehalt (%) | Katalysator-menge (ppm) | Reak-tions-temp. (°C) | Reak-tions-zeit (Stunden) | OH-Zahl berech-net | Viskosität bei 25°C (mPas.s) |
|---|---|---|---|---|---|---|---|---|---|---|
| A 2 | II | Neopentyl-glykol | TDI | 0,8 | 20 | 100 SO | 100 | 0,5 | 55.2 | 41 000 |
| A 3 | III | " | " | " | " | 200 SO | 120 | 0,3 | 57.6 | 25 800 |
| A 4 | IV | " | " | " | " | – | 100 | 2 | 63.2 | 12 350 |
| A 5 | V | " | " | " | " | – | 120 | 1 | 108 | 4 630 |
| A 6 | II | " | " | 1,0 | " | – | 100 | 1 | 36.8 | 65 000 |
| A 7 | II | " | " | 0,9 | | 100 Dabco | 100 | 0,5 | 45.4 | 86 000 |
| A 8 | II | " | " | 0,8 | " | – | 80 | 3 | 55.2 | 25 000 |
| A 9 | II | " | " | 0,7 | 10 | 100 Z | 100 | 0,5 | 56.3 | 3 260 |
| A 10 | II | " | " | 0,6 | " | 50 TI | 105 | 0,5 | 62.9 | 2 600 |
| A 11 | II | " | " | 0,5 | " | " | 50 | 8 | 70.7 | 1 940 |
| A 12 | IV | " | IPDI | 1,0 | 20 | 150 SO | 130 | 3 | 44.8 | 11 300 |
| A 13 | IV | " | MDI | 1,0 | 10 | 60 SO | 70 | 2 | 50.4 | 3 000 |
| A 14 | II | Ester I | TDI | 0,25 | 6 | – | 80 | 3 | 46,5 | 720 |
| A 15 | IV | Neopentyl-glykol | HDI | 1,0 | 15 | 200 SO | 100 | 3 | 47.6 | 4 150 |

(Fortsetzung)

| Beisp.-Nr. | Poly-ether | Diol | Isocya-nat | NCO/OH-Verh. | Polyurethan-Gehalt (%) | Katalysator-menge (ppm) | Reak-tions-temp. (°C) | Reak-tions-zeit (Stunden) | OH-Zahl berech-net | Viskosität bei 25°C (mPas.s) |
|---|---|---|---|---|---|---|---|---|---|---|
| A 16 | III | 2-Hydroxymethylbutanol-1 | TDI | 1,0 | 20 | 100 SO | 120 | 0,5 | 39.2 | 122 000 |
| A 17 | III | 2-Methyl-2-propylpropandiol-1,3 | TDI | 1,0 | 20 | " | 100 | " | 39.2 | 142 000 |
| A 18 | III | 2,2-Diethylpropandiol-1,3 | TDI | 1,0 | 20 | " | 120 | 2 | 39.2 | 150 000 |
| A 19 | III | 2,2-Bis-brommethylpropandiol-1,3 | TDI | 0,8 | 29 | 50 SO | 100 | 0,5 | 51.1 | 61 300 |
| A 20 | II | 2-Ethyl-2-Chlormethylpropandiol-1,3 | TDI | 0,95 | 22,7 | 50 Dabco | 100 | 0,5 | 35.6 | 150 000 |
| A 21 | II | 2,2-Bis-chlormethyl-propandiol-1,3 | TDI | 0,8 | 23,7 | - | 100 | 3 | 52,7 | 18 400 |
| A 22 | II | 50 % 3-Chlorpropandiol-1,2 50 % Neopentylglykol | TDI | 0,8 | 20 | - | 100 | 4 | 54.7 | 9 400 |
| A 23 | II | Ester I | TDI | 0,8 | 20 | - | 120 | 2 | 49.9 | 6 900 |
| A 24 | II | Urethandiol | TDI | 0,8 | 20 | - | 120 | 2 | 47.1 | 13 300 |
| A 25 | II | Ester II | TDI | 0,8 | 20 | - | 110 | 2 | 36.8 | 68 300 |
| A 26 | II | " | TDI | 0,5 | 5.5 | - | 100 | 2 | 46 | 970 |

In der Tabelle bedeuten :

Polyether I : gestartet auf Trimethylolpropan ; in der Kette 15 % Ethylenoxid und 85 % Propylenoxid ; über 95 Mol-% sekundäre OH-Gruppen ; OH-Zahl 45.

Polyether II : gestartet auf 90 % Glycerin und 10 % Propylenglykol-1,2 ; in der Kette 10 % Ethylenoxid und 90 % Propylenoxid ; über 95 Mol-% sekundäre OH-Gruppen ; OH-Zahl 45.

Polyether III : gestartet auf 84 % Trimethylolpropan und 16 % Propylenglykol-1,2 ; in der Kette 10 % Ethylenoxid und 90 % Propylenoxid ; über 95 Mol-% sekundäre OH-Gruppen ; OH-Zahl 49.

Polyether IV : linearer Polypropylenglykol-Polyether ; OH-Zahl 56.

Polyether V : Linearer Polypropylenglykol-Polyether ; OH-Zahl 112.

Ester I : Hydroxypivalinsäure-neopentylglykolester.

Ester II : Neopentylglykol-Polyadipat der OH-Zahl 211.

Urethandiol : Umsetzungsprodukt von Trimethylolpropan und 6-Chlorhexylisocyanat-1 im Molverhältnis 1 : 1.

TDI : Toluylendiisocyanat (80 % 2,4- und 20 % 2,6-Isomeres).

IPDI : 5-Isocyanato-1-isocyanatomethyl-1,3,3-trimethylcyclohexan.

MDI : 4,4'-Diphenylmethan-diisocyanat.

HDI : Hexamethylendiisocyanat.

Katalysator SO : Zinndioctoat.

Katalysator Z : Dibutylzinndilaurat.

Katalysator Dabco : Diazabicyclooctan.

Katalysator TI : Titansäure-tetrabutylester.

2) Herstellung von Polyurethan-Weichschaumstoffen (Beispiele 1.1 bis 5.2)

Aus den Lösungen $A_1$ bis $A_{13}$ sowie $A_{15}$ bis $A_{25}$ wurden Weichschaumstoffe hergestellt unter Variation des Grundpolyols und der Konzentration an gelöstem Polyurethan. Die Herstellung der Weichschaumblöcke erfolgte auf einer kontinuierlich arbeitenden Hochdruckmaschine (Fa. Hennecke, Birlinghoven/Siegkreis BRD). Die Verfahrensweise ist im folgenden tabellarisch zusammengefaßt. Die erhaltenen Schaumstoffe wurden mit einer Strichelelektrode von 10 $cm^2$ Oberfläche unter einem Druck von 9 $kp/cm^2$ verschweißt und zwar unter Verwendung von je 10 mm starken Schaumstoffolien (Schaum/Schaum) sowie einem Verbundsystem aus einem Polyamid-Velours, 8 mm Schaumfolie und einem Polyamid-Charmeuse. Die Verschweißspannung betrug 650 mV, die Stromstärke 480 mA.

Aus den Lösungen $A_{14}$ und $A_{26}$ wurden auf der gleichen Maschine offenzellige Weichschaumstoffe hergestellt. Die Offenzelligkeit wurde nach einem beim Anmelder üblichen Verfahren durch Messung des Widerstandes bestimmt, den ein definierter Schaumformkörper einem genormten Luftstrom entgegensetzt. Die angegebenen Zahlenwerte sind Skalenteile einer Skala, die von 0 (Nullwert ; ohne Schaumstoff) bis 350 (geschlossenzelliger Schaum) reicht. Ein herkömmlicher offenzelliger Polyetherschaum erreicht auf dieser Skala 45, ein nach dem Explosionsverfahren retikulierter Polyesterschaum 15 Skalenteile.

(Siehe Tabellen Seite 12 ff.)

| Ausgangskomponenten (Gew.-Teile) | 1.1 | 1.2 | 1.3 | 1.4 | 1.5 | 1.6 | 1.7 | 1.8 | 1.9 |
|---|---|---|---|---|---|---|---|---|---|
| A1 | 50 | 25 | ./. | ./. | ./. | ./. | ./. | ./. | ./. |
| A2 | ./. | ./. | 50 | 25 | ./. | ./. | ./. | ./. | ./. |
| A3 | ./. | ./. | ./. | ./. | 50 | 25 | ./. | ./. | ./. |
| A4 | ./. | ./. | ./. | ./. | ./. | ./. | 25 | ./. | ./. |
| A5 | ./. | ./. | ./. | ./. | ./. | ./. | ./. | 25 | ./. |
| Polyether I | 50 | 75 | ./. | ./. | 50 | 75 | ./. | ./. | ./. |
| Polyether II | ./. | ./. | 50 | 75 | ./. | ./. | ./. | ./. | 100 |
| Polyether III | ./. | ./. | ./. | ./. | ./. | ./. | 75 | 75 | ./. |
| Wasser | 2,5 | 2,5 | 2,5 | 3,0 | 2,5 | 2,5 | 2,7 | 2,7 | 2,5 |
| handelsüblicher Weichschaumstabilisator (Polyalkylenglykol-Polysiloxan-Copolymeres) | 0,5 | 0,5 | 0,8 | 0,7 | 0,5 | 0,5 | 0,8 | 0,5 | 0,7 |
| Dimethylethanolamin | 0,8 | 0,6 | 0,8 | 0,5 | 0,8 | 0,8 | 0,8 | 1,0 | 0,6 |
| handelsüblicher Aminaktivator (PS 207 der Bayer AG) | 0,1 | ./. | 0,05 | 0,1 | 0,1 | 0,1 | 0,1 | ./. | 0,1 |
| Zinn-(II)-octoat | 0,05 | 0,1 | 0,05 | 0,1 | 0,05 | 0,1 | 0,12 | 0,15 | 0,2 |
| TDI | 34,4 | 34,0 | 34,4 | 39,3 | 34,4 | 34,0 | 36,9 | 38,6 | 33,7 |
| NCO-Index | 105 | 105 | 105 | 105 | 105 | 105 | 105 | 105 | 105 |

(Fortsetzung)

| Physikalische Eigenschaften | 1.1 | 1.2 | 1.3 | 1.4 | 1.5 | 1.6 | 1.7 | 1.8 | 1.9 |
|---|---|---|---|---|---|---|---|---|---|
| Raumgewicht (kg/m$^3$) | 37 | 36 | 38 | 29 | 36 | 35 | 32 | 33 | 38 |
| Zugfestigkeit (kPa) | 130 | 140 | 140 | 110 | 140 | 120 | 125 | 140 | 105 |
| Bruchdehnung (%) | 175 | 210 | 350 | 140 | 220 | 150 | 230 | 310 | 230 |
| Stauchhärte bei 40 % (kPa) | 3,9 | 3,6 | 3,45 | 4,5 | 4,6 | 3,8 | 4,0 | 3,7 | 3,95 |
| Druckverformungsrest bei 90 % ((%) | 7,5 | 4,8 | 7,6 | 5,9 | 4,4 | 4,9 | 3,5 | 4,8 | 3,4 |
| Stauchhärteabfall nach Fordtest (%) | 28 | 21 | 25 | 35 | 40 | 38 | 38 | 40 | 35 |
| Druckverformungsrest (90 %) nach Fordtest (%) | 16 | 12 | 12 | 17 | 19 | 12 | 8 | 9 | 11 |
| Verschweißzeit Schaum/Schaum (sec) | 8 | 10 | 8 | 10 | 8 | 10 | 9 | 9 | 15 |
| Verschweißzeit Schaum/Polyamid-Verbund (sec) | 1,5 | 2,5 | 1,5 | 2,5 | 1,5 | 2,5 | 2 | 2 | 8 |

Die erhaltenen Schaumstoffe sind offenzellig, störungsfrei und problemlos mit textilen Deckschichten flammkaschierbar. Die entstandenen Schweißnähte bei den Beispielen 1.1 bis 1.8 sind deutlich ausgeprägt, frei von Durchschlägen und zeigen eine starke Haftung.

Die folgenden Beispiele 2.1 bis 2.6 zeigen die Herstellung weichelastischer Schaumstoffe aus Polyurethanlösungen in Polyether-Polyolen unter Variation der molaren Umsetzungsverhältnisse Neopentylglykol/T 80 und der Konzentration an gelöstem Polyurethan (Verfahrensweise und Verschweißung wie oben).

| Ausgangskomponenten (Gew.-Teile) | 2.1 | 2.2 | 2.3 | 2.4 | 2.5 | 2.6 |
|---|---|---|---|---|---|---|
| A6 | 50 | ./. | ./. | ./. | ./. | ./. |
| A7 | ./. | 50 | ./. | ./. | ./. | ./. |
| A8 | ./. | ./. | 50 | ./. | ./. | ./. |
| A9 | ./. | ./. | ./. | 100 | ./. | ./. |
| A10 | ./. | ./. | ./. | ./. | 100 | ./. |
| A11 | ./. | ./. | ./. | ./. | ./. | 100 |
| Polyether II | 50 | 50 | 50 | ./. | ./. | ./. |
| Wasser | 2,5 | 2,5 | 2,5 | 2,5 | 2,5 | 2,5 |
| handelsüblicher Weichschaumstabilisator (Polyalkylenglykol-Polysiloxan-Copolymeres) | 0,7 | 0,7 | 0,8 | 0,8 | 0,7 | 0,7 |
| Dimethylethanolamin | 1,0 | 0,8 | 0,8 | 0,9 | 1,0 | 1,0 |
| handelsüblicher Aminaktivator (PS 207 der Bayer AG) | 0,05 | 0,1 | 0,1 | 0,1 | 0,1 | 0,1 |
| Zinn-(II)-octoat | 0,07 | 0,05 | 0,05 | 0,015 | 0,015 | 0,015 |
| TDI | 32,9 | 33,6 | 34,4 | 35,4 | 36,4 | 37,8 |
| NCO-Index | 105 | 105 | 105 | 105 | 105 | 105 |

(Fortsetzung)

| Physikalische Eigenschaften | 2.1 | 2.2 | 2.3 | 2.4 | 2.5 | 2.6 |
|---|---|---|---|---|---|---|
| Raumgewicht ($kg/m^3$) | 37 | 37 | 35 | 35 | 36,5 | 35 |
| Zugfestigkeit (kPa) | 130 | 140 | 140 | 145 | 175 | 140 |
| Bruchdehnung (%) | 185 | 180 | 350 | 415 | 375 | 330 |
| Stauchhärte (40 %) (kPa) | 5,9 | 5,85 | 3,45 | 3,4 | 3,65 | 3,5 |
| Druckverformungsrest (90 %) (%) | 8,3 | 8,5 | 7,6 | 11 | 14 | 18 |
| Stauchhärteabfall nach Fordtest (%) | 35 | 32 | 25 | 24 | 32 | 11 |
| Druckverformungsrest nach Fordtest (%) | 17 | 14 | 12 | 18 | klebt | 64 |
| Verschweißzeit Schaum/Schaum (sec) | 10 | 9 | 8 | 8 | 7 | 6 |
| Verschweißzeit Schaum/Polyamid-Verbund (sec) | 2,5 | 2,0 | 1,5 | 1,5 | 1,5 | 1,3 |

Die erhaltenen Schaumstoffe sind offenzellig, störungsfrei und problemlos mit textilen Deckschichten flammkaschierbar. Die erhaltenen Schweißnähte sind deutlich ausgeprägt, störungsfrei, und zeigen starke Haftung.

Die nachstehenden Beispiele 3.1 bis 3.3 zeigen die Herstellung weichelastischer Schaumstoffe aus Polyurethanlösungen in Polyether-Polyolen unter Variation der Isocyanat-Komponente des in situ hergestellten Polyurethans und der Konzentration der Lösung. Die Schaumstoffe wurden nach dem Handverschäumungsverfahren hergestellt (inniges Vermischen der Komponenten mit Ausnahme des Isocyanates in einem Pappbecher, Zugabe des Isocyanates, weiteres Verrühren und Aufschäumen des Reaktionsgemisches in einem rechteckigen Papierbehälter). Die Hochfrequenzverschweißung erfolgte wie oben beschrieben.

| Ausgangskomponenten (Gew.-Teile) | 3.1 | 3.2 | 3.3 |
|---|---|---|---|
| A12 | 25 | ./. | ./. |
| A13 | ./. | 50 | ./. |
| A15 | ./. | ./. | 33,3 |
| Polyether II | 75 | 50 | 66,7 |
| Wasser | 2,5 | 2,5 | 2,5 |
| handelsüblicher Weichschaumstabilisator (Polyalkylenglykol-Polysiloxan-Copolymeres) | 0,8 | 0,8 | 0,8 |
| Dimethylethanolamin | 1,0 | 1,0 | 1,0 |
| Zinn-(II)-octoat | 0,15 | 0,2 | 0,15 |
| TDI | 33,8 | 34,1 | 33,7 |
| NCO-Index | 105 | 105 | 105 |

(Fortsetzung)

| Physikalische Eigenschaften | 3.1 | 3.2 | 3.3 |
|---|---|---|---|
| Raumgewicht ($kg/m^3$) | 36,5 | 36 | 38 |
| Zugfestigkeit (kPa) | 150 | 150 | 135 |
| Bruchdehnung (%) | 390 | 470 | 415 |
| Stauchhärte (40 %) (kPa) | 3,25 | 3,1 | 3,2 |
| Druckverformungsrest 90 % (%) | 5,8 | 12 | 6,4 |
| Verschweißzeit Schaum/Schaum (sec) | 9 | 9 | 9 |
| Verschweißzeit Schaum/Polyamid-Velours (sec) | 2,0 | 2,0 | 2,0 |

Die erhaltenen Schaumstoffe sind offenzellig und störungsfrei sowie problemlos mit textilen Deckschichten flammkaschierbar. Die Qualität der Schweißnähte ist wie bei den Beispielen 1.1 bis 1.9.

Die folgenden Beispiele 4.1 bis 4.10 zeigen die Herstellung von weichelastischen Schaumstoffen aus Polyurethanlösungen in Polyether-Polyolen unter Variation der Diolkomponente des gelösten Polyurethans. Verschäumung wie bei Anwendungsbeispielen 3.1 bis 3.3; Verschweißung wie bei Anwendungsbeispielen 1.1 bis 1.9.

| Ausgangskomponenten (Gew.-Teile) | 4.1 | 4.2 | 4.3 | 4.4 | 4.5 | 4.6 | 4.7 | 4.8 | 4.9 | 4.10 |
|---|---|---|---|---|---|---|---|---|---|---|
| A 16 | 25 | ./. | ./. | ./. | ./. | ./. | ./. | ./. | ./. | ./. |
| A 17 | ./. | 50 | ./. | ./. | ./. | ./. | ./. | ./. | ./. | ./. |
| A 18 | ./. | ./. | 50 | ./. | ./. | ./. | ./. | ./. | ./. | ./. |
| A 19 | ./. | ./. | ./. | 50 | ./. | ./. | ./. | ./. | ./. | ./. |
| A 20 | ./. | ./. | ./. | ./. | 50 | ./. | ./. | ./. | ./. | ./. |
| A 21 | ./. | ./. | ./. | ./. | ./. | 50 | ./. | ./. | ./. | ./. |
| A 22 | ./. | ./. | ./. | ./. | ./. | ./. | 50 | ./. | ./. | ./. |
| A 23 | ./. | ./. | ./. | ./. | ./. | ./. | ./. | 50 | ./. | ./. |
| A 24 | ./. | ./. | ./. | ./. | ./. | ./. | ./. | ./. | 50 | ./. |
| A 25 | ./. | ./. | ./. | ./. | ./. | ./. | ./. | ./. | ./. | 25 |
| Polyether III | 75 | ./. | ./. | ./. | ./. | ./. | ./. | ./. | ./. | ./. |
| Polyether I | ./. | 50 | 50 | 50 | ./. | ./. | ./. | ./. | ./. | ./. |
| Polyether II | ./. | ./. | ./. | ./. | ./. | 50 | 50 | 50 | 50 | 75 |
| Wasser | 2,7 | 2,5 | 2,5 | 2,5 | 3,0 | 2,5 | 2,5 | 2,5 | 2,5 | 2,5 |
| handelsüblicher Weichschaumstabilisator (Polyalkylenglykol-Polysiloxan-Copolymeres) | 0,5 | 0,5 | 0,5 | 0,5 | 0,8 | 0,5 | 0,8 | 0,7 | 0,5 | 0,6 |
| Dimethylethanolamin | 0,8 | 0,8 | 0,5 | 0,8 | 0,6 | 0,8 | 0,9 | 0,5 | 0,5 | 0,5 |
| handelsüblicher Aminaktivator (PS 207 der Bayer AG) | ./. | ./. | ./. | ./. | ./. | 0,05 | 0,1 | ./. | 0,1 | 0,1 |
| Zinn-(II)-octoat | 0,15 | 0,25 | 0,04 | 0,025 | 0,05 | 0,03 | 0,07 | 0,05 | 0,05 | 0,15 |
| TDI | 35,6 | 33,2 | 33,2 | 34,1 | 38,1 | 31,0 | 34,4 | 34,0 | 33,7 | 33,3 |
| NCO-Index | 105 | 105 | 105 | 105 | 105 | 95 | 105 | 105 | 105 | 105 |

(Fortsetzung)

| Physikalische Eigenschaften | 4.1 | 4.2 | 4.3 | 4.4 | 4.5 | 4.6 | 4.7 | 4.8 | 4.9 | 4.10 |
|---|---|---|---|---|---|---|---|---|---|---|
| Raumgewicht ($kg/m^3$) | 34,5 | 37 | 36 | 36,5 | 31 | 36 | 36 | 37 | 39 | 39 |
| Zugfestigkeit (kPa) | 150 | 125 | 140 | 120 | 115 | 135 | 120 | 175 | 165 | 165 |
| Bruchdehnung (%) | 270 | 220 | 140 | 239 | 219 | 330 | 200 | 250 | 200 | 220 |
| Stauchhärte 40 % (kPa) | 4,8 | 3,9 | 4,1 | 4,3 | 3,8 | 3,4 | 3,8 | 4,0 | 4,0 | 5,7 |
| Druckverformungsrest 90 % (%) | 4,5 | 5,6 | 7,8 | 3,9 | 4,7 | 7,2 | 6,1 | 4,5 | 8,3 | 8,9 |
| Stauchhärteabfall nach Fordtest (%) | 35 | 40 | 35 | 30 | 38 | 41 | 44 | 33 | 25 | 32 |
| Druckverformungsrest nach Fordtest (%) | 15 | 18 | 26 | 17 | 38 | 17 | 19 | 12 | 18 | 17 |
| Verschweißzeit Schaum/Schaum (sec) | 10 | 9 | 9 | 5 | 7 | 5 | 5 | 12 | 9 | 12 |
| Verschweißzeit Schaum/Polyamid-Velours (sec) | 2,5 | 2,0 | 2,0 | 1,3 | 1,3 | 1,0 | 1,0 | 3,0 | 1,5 | 3,0 |

Die erhaltenen Schaumstoffe sind offenzellig und störungsfrei sowie problemlos mit textilen Deckschichten flammkaschierbar. Die Schweißnähte sind deutlich ausgeprägt, frei von Durchschlägen und zeigen starke Haftung.

(Fortsetzung)

Herstellung offenzelliger Schaumstoffe

| Ausgangskomponenten (Gew.-Teile) | 5.1 | 5.2 |
|---|---|---|
| A 14 | 100 | ./. |
| A 26 | ./. | 100 |
| Wasser | 4,0 | 4,0 |
| handelsüblicher Weichschaum-Stabilisator (Polyalkylenglykol-Polysiloxan-Copolymeres) | 1,0 | 1,0 |
| Dimethylethanolamin | ./. | 0,2 |
| handelsüblicher Aminaktivator (PS 207 der Bayer AG) | 0,1 | 0,1 |
| Zinn(II)-octoat | 0,07 | 0,1 |
| TDI | 52,3 | 50,8 |
| NCO-Index | 105 | 105 |
| Raumgewicht | 24 | 26 |
| Zugfestigkeit (kPa) | 110 | 160 |
| Bruchdehnung (%) | 240 | 250 |
| Stauchhärte 40 % (kPa) | 3,25 | 4,1 |
| Druckverformungsrest bei 90 % (%) | 8,3 | 11 |
| Stauchhärteabfall nach Fordtest (%) | 18 | 20 |
| Druckverformungsrest nach Fordtest (%) | 8,9 | 15 |
| Offenzelligkeit (nach der oben erläuterten Meßmethode) | 20 | 20 |

**Ansprüche**

1. Verfahren zur Herstellung von flammkaschierbaren und hochfrequenzverschweißbaren Polyurethan-Weichschaumstoffen durch Umsetzung von Polyisocyanaten mit mindestens zwei Hydroxylgruppen aufweisenden höhermolekularen Verbindungen, gegebenenfalls weiteren höher- und/oder niedermolekularen Verbindungen mit gegenüber Isocyanaten reaktiven Wasserstoffatomen und Wasser, gegebenenfalls unter Mitverwendung von weiteren Treibmitteln, Katalysatoren, Schaumstabilisatoren und anderen an sich bekannten Zusatzstoffen, dadurch gekennzeichnet, daß als höhermolekulare Verbindung ausschließlich oder anteilweise Lösungen von

A) 3 bis 60 Gew.-%, bezogen auf A) + B), an Umsetzungsprodukten von

a) Polyisocyanaten mit

b) diprimären Diolen des Molekulargewichts 90 bis 800, welche an beiden Hydroxylgruppen die Struktur

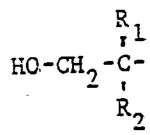

aufweisen, in welcher

$R_1$ Chlor, einen Alkyl-, Cycloalkyl-, Aralkyl- oder Arylrest mit 1 bis 10 Kohlenstoffatomen bedeutet, der durch Chlor, Estergruppen, Ethergruppen, Amidgruppen, Urethangruppen oder Nitrilgruppen substituiert bzw. unterbrochen sein kann,

$R_2$ einen Rest wie $R_1$ oder Wasserstoff bedeutet,

c) gegebenenfalls bis zu 50 Mol-%, bezogen auf die Diole b), an Diolen des Molekulargewichts 104 bis 800, welche die genannte Struktureinheit nur einmal aufweisen, sowie

d) gegebenenfalls bis zu 20 Mol-%, bezogen auf die Diole b), an weiteren mono-, di- oder polyfunktionellen Alkoholen,

wobei das NCO/OH-Verhältnis zwischen 0,2 und 1,2 liegt, in

B) mindestens zwei Hydroxylgruppen aufweisenden Polyethern mit einem mittleren Molekulargewicht von 500 bis 12 000, bei denen mindestens 80 % der Hydroxylgruppen sekundär sind, verwendet werden.

2. Verfahren nach Anspruch 1), dadurch gekennzeichnet, daß als höhermolekulare Verbindung mit mindestens zwei Hydroxylgruppen Lösungen mit einer Konzentration an gelöstem Polyurethan A) zwischen 5 und 30 Gew.-% verwendet werden.

3. Verfahren nach Ansprüchen 1 und 2, dadurch gekennzeichnet, daß als höhermolekulare Verbindung mit mindestens zwei Hydroxylgruppen Lösungen mit einer Konzentration an gelöstem Polyurethan A) von weniger als 20 Gew.-% und mit einer Viskosität unter 20 000 mPa.s/25 °C verwendet werden.

4. Verfahren nach Ansprüchen 1 bis 3, dadurch gekennzeichnet, daß Komponente A) ein Umsetzungsprodukt eines Polyisocyanats mit einem diprimären Diol aus der Gruppe

(i) in 2-Stellung disubstituierter 1,3-Propandiole,

(ii) in 2-Stellung monosubstituierter 1,3-Propandiole,

(iii) von Umsetzungsprodukten von 1 Mol eines 1,1,1-Tris-hydroxymethylalkans mit einem Mol eines Monoisocyanats oder einer Monocarbonsäure und

(iv) von Polyestern mit einem Molekulargewicht bis 800 aus den Verbindungen (i), (ii) oder (iii) und einer Dicarbonsäure ist.

5. Verfahren nach Ansprüchen 1 bis 4, dadurch gekennzeichnet, daß Komponente A) in einem NCO/OH-Äquivalentverhältnis zwischen 0,5 : 1 und 1 : 1 hergestellt wurde.

6. Verfahren nach Ansprüchen 1 bis 4, dadurch gekennzeichnet, daß Komponente A) ein Umsetzungsprodukt aus einem Polyisocyanat und einem Polyadipat des Neopentylglykols oder Hydroxypivalinsäure-Neopentylglykolesters mit einem Molekulargewicht bis 800 ist, wobei das NCO/OH-Verhältnis zwischen 0,2 und 0,7 liegt.

7. Verfahren nach Ansprüchen 1 bis 6, dadurch gekennzeichnet, daß man Lösungen verwendet, in denen Komponente A) ein Umsetzungsprodukt auf Basis von 2,4- und/oder 2,6-Toluylendiisocyanat ist.

8. Lösungen von

A) 3 bis 60 Gew.-%, bezogen auf A) + B), an Umsetzungsprodukten von

a) Polyisocyanaten mit

b) diprimären Diolen des Molekulargewichts 90 bis 800, welche an beiden Hydroxylgruppen die Struktur

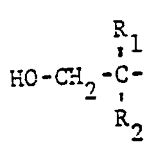

aufweisen, in welcher

$R_1$ Chlor, einen Alkyl-, Cycloalkyl-, Aralkyl- oder Arylrest mit 1 bis 10 Kohlenstoffatomen bedeutet, der durch Chlor, Estergruppen, Ethergruppen, Amidgruppen, Urethangruppen oder Nitrilgruppen substituiert bzw. unterbrochen sein kann,

$R_2$ einen Rest wie $R_1$ oder Wasserstoff bedeutet,

c) gegebenenfalls bis zu 50 Mol-%, bezogen auf die Diole b), an Diolen des Molekulargewichts 104 bis 800, welche die genannte Struktureinheit nur einmal aufweisen, sowie

d) gegebenenfalls bis zu 20 Mol-%, bezogen auf die Diole b), an weiteren mono-, di- oder polyfunktionellen Alkoholen,

wobei das NCO/OH-Verhältnis zwischen 0,2 und 1,2 liegt, in

B) mindestens zwei Hydroxylgruppen aufweisenden Polyethern mit einem mittleren Molekulargewicht von 500 bis 12 000, bei denen mindestens 80 % der Hydroxylgruppen sekundär sind,

wobei jedoch Lösungen der Umsetzungsprodukte von Diisocyanaten mit 2,2-Dimethyl-propandiol-1,3 ausgenommen sind.

9. Lösungen nach Anspruch 8, dadurch gekennzeichnet, daß Komponente A) ein Umsetzungsprodukt auf Basis von 2,4- und/oder 2,6-Toluylendiisocyanat ist.

10. Lösungen nach Ansprüchen 8 und 9, dadurch gekennzeichnet, daß Komponente A) ein Umsetzungsprodukt eines Polyisocyanats mit einem diprimären Diol aus der Gruppe

(i) in 2-Stellung disubstituierter 1,3-Propandiole

(ii) in 2-Stellung monosubstituierter 1,3-Propandiole,

(iii) Umsetzungsprodukte von 1 Mol eines 1,1,1-Tris-hydroxymethylalkans mit einem Mol eines Monoisocyanats oder einer Monocarbonsäure und

(iv) Polyester mit einem Molekulargewicht bis 800 aus den Verbindungen (i), (ii) oder (iii) und einer Dicarbonsäure ist,

wobei jedoch Lösungen der Umsetzungsprodukte von Diisocyanaten und 2,2-Dimethyl-propandiol-1,3 ausgenommen sind.

11. Lösungen nach Ansprüchen 8 bis 10, dadurch gekennzeichnet, daß Komponente A) in einem NCO/OH-Äquivalentverhältnis zwischen 0,5 : 1 und 1 : 1 hergestellt wurde.

12. Lösungen nach Ansprüchen 8 bis 10, dadurch gekennzeichnet, daß Komponente A) ein Umsetzungsprodukt aus einem Polyisocyanat und einem Polyadipat des Neopentylglykols oder Hydroxypivalinsäure-Neopentylglykolesters mit einem Molekulargewicht bis 800 ist, wobei das NCO/OH-Verhältnis zwischen 0,2 und 0,7 liegt.

13. Lösungen nach Ansprüchen 8 bis 12, dadurch gekennzeichnet, daß die Komponente A) in soviel Polyetherdiolen B) gelöst wird, daß der Gehalt von A) in der Mischung A) +B) weniger als 20 Gew.-% beträgt.

14. Lösungen nach Ansprüchen 8 bis 13, dadurch gekennzeichnet, daß die Viskosität der Lösungen weniger als 20 000 mPa.s/25 °C beträgt.

**Claims**

1. Process for the production of flame-bondable and high-frequency-weldable polyurethane flexible foamed plastics by reacting polyisocyanates with higher-molecular compounds having at least two hydroxyl groups, optionally other higher- and/or low-molecular compounds having hydrogen atoms which are reactive towards isocyanates, and water, optionally also using other blowing agents, catalysts, foam stabilisers and other additives which are known per se, characterised in that the higher-molecular compound used consists entirely or partly of solution of

A) 3 to 60 % by weight, based on A) + B), of reaction products of

a) polyisocyanates with

b) diprimary diols having a molecular weight of 90 to 800, which have the following structure at both hydroxyl groups

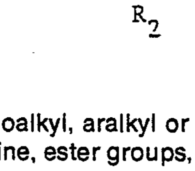

in which

$R_1$ denotes chlorine or an alkyl, cycloalkyl, aralkyl or aryl radical with 1 to 10 carbon atoms, which can be substituted or interrupted by chlorine, ester groups, ether groups, amide groups, urethane groups or nitrile groups, and

$R_2$ denotes a radical such as $R_1$ or hydrogen,

c) optionally up to 50 mol-%, based on the diols b), of diols having a molecular weight of 104 to 800 which contain the abovementioned structural unit only once, and

d) optionally up to 20 mol-%, based on the diols b), of other mono-, di- or poly-hydric alcohols, the NCO/OH ratio being between 0.2 and 1.2, in

B) polyethers having at least two hydroxyl groups, with an average molecular weight of 500 to 12 000, in which at least 80 % of the hydroxyl groups are secondary.

2. Process according to Claim 1, characterised in that solutions having a concentration of between 5 and 30 % by weight of dissolved polyurethane A) are used as the higher-molecular compound having at least two hydroxyl groups.

3. Process according to Claims 1 and 2, characterised in that solutions having a concentration of less than 20 % of dissolved polyurethane A) and a viscosity of less than 20 000 mPa.s/25 °C are used as the higher-molecular compound having at least two hydroxyl groups.

4. Process according to Claims 1 to 3, characterised in that component A) is a reaction product of a polyisocyanate with a diprimary diol from the group comprising

(i) 1,3-propane diols disubstituted in the 2-position,

(ii) 1,3-propane diols monosubstituted in the 2-position,

(iii) reaction products of 1 mol of a 1,1,1-tris-hydroxymethyl alkane with one mol of a monoisocyanate or of a monocarboxylic acid and

(iv) polyesters having a molecular weight of up to 800 produced from compounds (i), (ii) or (iii) and a dicarboxylic acid.

5. Process according to Claims 1 to 4, characterised in that component A) was prepared in an NCO/OH equivalent ratio of between 0,5 : 1 and 1 : 1.

6. Process according to Claims 1 to 4, characterised in that component A) is a reaction product of a polyisocyanate and a polyadipate of neopentyl glycol or hydroxy pivalic acid neopentyl glycol ester having a molecular weight of up to 800, the NCO/OH ratio being between 0,2 and 0,7.

7. Process according to Claims 1 to 6, characterised in that solutions are used in which component A) is a reaction product based on 2,4- and/or 2,6-toluylene diisocyanate.

8. Solutions of

A) 3 to 60 % by weight, based on A) + B) of reaction products of

a) polyisocyanates with

b) diprimary diols having a molecular weight of 90 to 800, which have the following structure at both hydroxyl groups

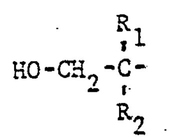

in which

$R_1$ denotes chlorine or an alkyl, cycloalkyl, aralkyl or aryl radical with 1 to 10 carbon atoms, which can be substituted or interrupted by chlorine, ester groups, ether groups, amide groups, urethane groups or nitrile groups, and

$R_2$ denotes a radical such as $R_1$ or hydrogen,

c) optionally up to 50 mol-%, based on the diols b), of diols having a molecular weight of 104 to 800 which contain the abovementioned structural unit only once, and

d) optionally up to 20 mol-%, based on the diols b), of other mono-, di- or poly-hydric alcohols, the NCO/OH ratio being between 0.2 and 1.2, in

B) polyethers having at least two hydroxyl groups, with an average molecular weight of 500 to 12 000, in which at least 80 % of the hydroxyl groups are secondary,

with the exception, however, of solutions of the reaction products of diisocyanates with 2,2-dimethyl-1,3-propanediol.

9. Solutions according to Claim 8, characterised in that component A) is a reaction product based on 2,4- and/or 2,6-toluylene diisocyanate.

10. Solutions according to Claims 8 and 9, characterised in that component A) is a reaction product of a polyisocyanate with a diprimary diol from the group comprising

(i) 1,3-propane diols disubstituted in the 2-position,

(ii) 1,3-propane diols monosubstituted in the 2-position,

(iii) reaction products of 1 mol of a 1,1,1-tris-hydroxymethyl alkane with one mol of a monoisocyanate or of a monocarboxylic acid and

(iv) polyesters having a molecular weight of up to 800 produced from compounds (i), (ii) or (iii) and a dicarboxylic acid,

with the exception, however, of solution of the reaction products of diisocyanates and 2,2-dimethyl 1,3-propanediol.

11. Solutions according to Claims 8 to 10, characterised in that component A) was prepared in an NCO/OH equivalent ratio of between 0.5 : 1 and 1 : 1.

12. Solutions according to Claims 8 to 10, characterised in that component A) is a reaction product of a polyisocyanate and a polyadipate of neopentyl glycol or hydroxypivalic acid neopentyl glycol ester having a molecular weight of up to 800, the NCO/OH ratio being between 0.2 and 0.7.

13. Solutions according to Claims 8 to 12, characterised in that component A) is dissolved in such a quantity of polyether diols B) that the content of A) in the mixture of A) + B) is less than 20 % by weight.

14. Solutions according to Claims 8 to 13, characterised in that the viscosity of the solutions is less than 20 000 mPa.s/25 °C.

**Revendications**

1. Procédé de préparation de mousses souples de polyuréthanne pouvant être revêtues à la flamme et soudables par haute fréquence, par réaction de polyisocyanates avec des composés à poids moléculaires supérieurs présentant au moins deux groupes hydroxyles, éventuellement d'autres composés à poids moléculaires supérieurs et/ou inférieurs, comportant des atomes d'hydrogène pouvant réagir avec les isocyanates, et de l'eau, en utilisant éventuellement aussi d'autres porogènes, catalyseurs, stabilisants de mousses et d'autres additifs connus en eux-mêmes, procédé caractérisé en ce qu'on utilise comme composé à poids moléculaire supérieur exclusivement ou en partie des solutions de :

A) 3 à 60 % en poids, par rapport à A) + B) de produits de réaction

a) de polyisocyanates avec

b) des diols diprimaires d'un poids moléculaire de 80 à 800, qui présentent sur les deux groupes hydroxyles la structure

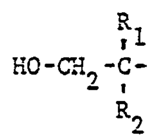

dans laquelle

$R_1$ représente du chlore, un radical alkyle, cycloalkyle, aralkyle ou aryle ayant 1 à 10 atomes de carbone, qui peut être substitué ou interrompu par du chlore, des groupes esters, des groupes éthers, des groupes amides, des groupes uréthannes ou des groupes nitriles,

$R_2$ représente un radical tel que $R_1$ ou de l'hydrogène,

c) éventuellement jusqu'à 50 moles %, par rapport aux diols b), de diols d'un poids moléculaire de 104 à 800, qui ne présentent qu'une fois le motif structurel cité, ainsi que

d) éventuellement jusqu'à 20 moles %, par rapport aux diols b), d'autres alcools mono-, di- ou polyfonctionnels,

le rapport NCO/OH se situant entre 0,2 et 1,2, dans

B) des polyéthers présentant un poids moléculaire moyen de 500 à 12 000 et comportant au moins deux groupes hydroxyles, dont au moins 80 % des groupes hydroxyles sont secondaires.

2. Procédé selon la revendication 1, caractérisé en ce qu'on utilise comme composé à poids moléculaire supérieur, présentant au moins deux groupes hydroxyles, des solutions ayant une concentration en polyuréthanne A) dissous comprise entre 5 et 30 % en poids.

3. Procédé selon les revendications 1 et 2, caractérisé en ce qu'on utilise comme composé à poids moléculaire supérieur, comportant au moins deux groupes hydroxyles, des solutions présentant une concentration en polyuréthanne A) inférieure à 20 % en poids et ayant une viscosité inférieure à 20 000 mPa.s à 25 °C.

4. Procédé selon les revendications 1 à 3, caractérisé en ce que le constituant A) est un produit de réaction d'un polyisocyanate avec un diol diprimaire choisi dans l'ensemble :

(i) des 1,3-propanediols disubstitués en position 2,

(ii) des 1,3-propanediols monosubstitués en position 2,

(iii) des produits de réaction de 1 mole d'un 1,1,1-tris-hydroxyalcane avec 1 mole d'un monoisocyanate ou d'un acide monocarboxylique, et

(iv) des polyesters présentant un poids moléculaire allant jusqu'à 800 et provenant des composés (i), (ii) ou (iii) et d'un acide dicarboxylique.

5. Procédé selon les revendications 1 à 4, caractérisé en ce que le constituant A) a été préparé avec un rapport entre équivalents de NCO et de OH compris entre 0,5 : 1 et 1 : 1.

6. Procédé selon les revendications 1 à 4, caractérisé en ce que le constituant A) est un produit de

réaction d'un polyisocyanate et d'un polyadipate de néopentylglycol ou d'un hydroxypivalate de néopentylglycol présentant un poids moléculaire allant jusqu'à 800, le rapport NCO/OH étant compris entre 0,2 et 0,7.

7. Procédé selon les revendications 1 à 6, caractérisé en ce qu'on utilise des solutions dans lesquelles le constituant A) est un produit de réaction à base de 2,4- ou de 2,6-diisocyanate de toluylène.

8. Solutions de

A) 3 à 60 % en poids, par rapport à A) + B), de produits de réaction

a) de polyisocyanates avec

b) des diols diprimaires d'un poids moléculaire compris entre 90 et 800, qui présentent sur les deux groupes hydroxyles la structure

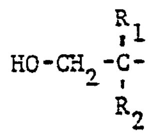

dans laquelle

$R_1$ représente le chlore, un radical alkyle, cycloalkyle, aralkyle ou aryle ayant 1 à 10 atomes de carbone, qui peut être substitué ou interrompu par du chlore, des groupes esters, des groupes éthers, des groupes amides, des groupes uréthannes, ou des groupes nitriles,

$R_2$ représente un radical tel que $R_1$ ou de l'hydrogène,

c) éventuellement jusqu'à 50 moles %, par rapport aux diols b), de diols d'un poids moléculaire compris entre 104 et 800, qui ne présentent qu'une fois le motif structurel cité, ainsi que

d) éventuellement jusqu'à 20 moles %, par rapport aux diols b), d'autres alcools mono-, di- ou polyfonctionnels,

le rapport NCO/OH se situant entre 0,2 et 1,2, dans

B) des polyéthers ayant un poids moléculaire moyen compris entre 500 et 12 000, qui présentent au moins deux groupes hydroxyles dont au moins 80 % des groupes hydroxyles sont secondaires,

à l'exclusion cependant des solutions des produits de réaction de diisocyanates avec le 2,2-diméthyl-propanedio-1,3.

9. Solutions selon la revendication 8, caractérisées en ce que le constituant A) est un produit de réaction à base de 2,4- et/ou de 2,6-diisocyanate de toluylène.

10. Solutions selon les revendications 8 et 9, caractérisées en ce que le constituant A) est un produit de réaction d'un polyisocyanate avec un diol diprimaire choisi dans l'ensemble

(i) des 1,3-propanediols disubstitués en position 2,

(ii) des 1,3-propanediols monosubstitués en position 2,

(iii) des produits de réaction d'une mole d'un 1,1,1-tris-hydroxyméthylalcane avec une mole d'un monoisocyanate ou d'un acide monocarboxylique, et

(iv) des polyesters ayant un poids moléculaire allant jusqu'à 800 et provenant des composés (i), (ii) ou (iii) et d'un acide dicarboxylique,

à l'exclusion cependant des solutions des produits de réaction de diisocyanates et du 2,2-diméthyl-propanediol-1,3.

11. Solutions selon les revendications 8 à 10, caractérisées en ce que le constituant A) a été préparé avec un rapport entre équivalents NCO/OH compris entre 0,5 : 1 et 1 : 1.

12. Solutions selon les revendications 8 à 10, caractérisées en ce que le constituant A) est un produit de réaction d'un polyisocyanate et d'un polyadipate de néopentylglycol ou d'hydroxypivalate de néopentylglycol présentant un poids moléculaire allant jusqu'à 800, le rapport NCO/OH se situant entre 0,2 et 0,7.

13. Solutions selon les revendications 8 à 12, caractérisées en ce que l'on dissout le constituant A) dans une quantité de polyétherdiols B telle que la teneur en A) dans le mélange A) + B) est inférieure à 20 % en poids.

14. Solutions selon les revendications 8 à 13, caractérisées en ce que la viscosité des solutions est inférieure à 20 000 mPa.s/25 °C.